# EUROPEAN PATENT APPLICATION

(11) **EP 3 664 483 A1**
(43) Date of publication of application: **10.06.2020**
(21) Application number: 18841945.1
(22) Date of filing: 22.05.2018
(51) Int. Cl.: H04W 4/38, H04W 4/021, H04W 4/20, H04W 12/00, H04W 12/10

(54) **WIRELESS COMMUNICATION DEVICE, WIRELESS COMMUNICATION METHOD AND WIRELESS COMMUNICATION SYSTEM**

(30) Priority: 02.08.2017 JP 2017149572
(71) Applicant: Sony Corporation, Tokyo 108-0075 (JP)
(72) Inventor: KAWAKAMI, Daisuke, Tokyo 108-0075 (JP)
(74) Representative: Witte, Weller & Partner Patentanwälte mbB
(86) International application number: PCT/JP2018/019589
(87) International publication number: WO 2019/026391

(57) **Abstract**

In a wireless communication system premised on one-way communication from a wireless terminal, the wireless terminal is authenticated easily and safely.

A wireless communication device includes a decryption unit and an authentication unit. The decryption unit decrypts encrypted node position information with a private key of the wireless communication device itself. The encrypted node position information is information included in transmission information transmitted by one-way communication from a node. The authentication unit authenticates the node with an authentication condition that the decrypted node position information indicates inside of a predetermined area.

## Description

### TECHNICAL FIELD

The present technology relates to a wireless communication system. Specifically, the present technology relates to a wireless communication device, a wireless communication system, and a processing method of those, which authenticate transmission information transmitted from a node.

### BACKGROUND ART

Conventionally, there has been proposed a technique for easily and safely authenticating a wireless terminal. For example, there has been proposed a network system that exchanges messages between an information terminal and an access point as association at the time of starting wireless communication (e.g., see Patent Document 1).

### CITATION LIST

### PATENT DOCUMENT

Patent Document 1: Japanese Patent Application Laid-Open No. 2009-124643

### SUMMARY OF THE INVENTION

### PROBLEMS TO BE SOLVED BY THE INVENTION

In the conventional technique described above, whether or not to permit wireless communication is determined on the basis of position information without using a user ID or a password. However, the conventional technique is premised on two-way communication between the information terminal and the access point, and is not suitable for a system configuration that requires power saving as in the IoT field.

The present technology has been conceived in view of such a situation, and an object of the present technology is to easily and safely authenticate a wireless terminal in a wireless communication system premised on one-way communication from the wireless terminal.

### SOLUTIONS TO PROBLEMS

The present technology has been conceived to solve the problem described above, and a first aspect of the present technology is to provide a wireless communication device, a wireless communication method thereof, and a wireless communication system including the wireless communication device including a decryption unit that decrypts, with its own private key, encrypted node position information included in transmission information transmitted by one-way communication from a node and an authentication unit that authenticates the node with an authentication condition that the decrypted node position information indicates inside of a predetermined area. Accordingly, there is exerted an effect in which the node is authenticated with the authentication condition that the node position information obtained by decrypting the encrypted node position information included in the transmission information transmitted by one-way communication indicates the inside of the predetermined area.

Furthermore, in the first aspect, the predetermined area described above may be an area managed by the wireless communication device. Accordingly, there is exerted an effect in which the node is authenticated with an authentication condition that the decrypted node position information indicates inside of the area managed by the wireless communication device.

Furthermore, in the first aspect, the authentication unit may authenticate the node with an authentication condition that both of the decrypted node position information and registered position information transmitted from another wireless communication device indicate the inside of the predetermined area described above. Accordingly, there is exerted an effect in which the node is authenticated with an authentication condition that a plurality of pieces of position information indicates the inside of the predetermined area.

Furthermore, in the first aspect, the predetermined area described above may be an area managed by the wireless communication device, and may be classified according to the registered position information. Accordingly, there is exerted an effect in which the node is classified according to the registered position information.

Furthermore, in the first aspect, the decryption unit described above may decrypt encrypted node identification information included in the transmission information with a public key of the node, and the authentication unit may authenticate the node with an authentication condition that the decrypted node position information indicates the inside of the predetermined area and the decrypted node identification information matches with predetermined node identification information. Accordingly, there is exerted an effect in which the node is authenticated further with the authentication condition that the node identification information obtained by decrypting the encrypted node identification information included in the transmission information transmitted by one-way communication matches with the predetermined node identification information.

Furthermore, in the first aspect, the public key of the node described above may be received from another wireless communication device. Furthermore, the public key of the node described above may be obtained from the node in advance.

Furthermore, in the first aspect, the transmission information described above may further include unencrypted second node identification information for identifying the node. Accordingly, there is exerted an effect in which the node can be easily identified and a public key to be used can be efficiently obtained.

Furthermore, in the first aspect, the transmission information described above may further include measurement information measured by the node. Accordingly, there is exerted an effect in which node measurement information is collected in the wireless communication device. Furthermore, in this case, the measurement information described above may be encrypted measurement information encrypted with its own public key, and the decryption unit may decrypt the encrypted measurement information with its own private key.

Furthermore, in the first aspect, the one-way communication described above may be wireless communication based on a low power, wide area (LPWA) scheme.

### EFFECTS OF THE INVENTION

According to the present technology, it becomes possible to exert a significant effect of being capable of easily and safely authenticating a wireless terminal in a wireless communication system premised on one-way communication from the wireless terminal. Note that the effects described herein are not necessarily limited, and may be any of the effects described in the present disclosure.

### BRIEF DESCRIPTION OF DRAWINGS

Fig. 1 is a diagram illustrating an exemplary overall configuration of a wireless communication system according to an embodiment of the present technology.
Fig. 2 is a diagram illustrating an exemplary communication mode of the wireless communication system according to the embodiment of the present technology.
Fig. 3 is a diagram illustrating an exemplary configuration of a node 100 according to the embodiment of the present technology.
Fig. 4 is a diagram illustrating an exemplary configuration of a mobile terminal 200 according to the embodiment of the present technology.
Fig. 5 is a diagram illustrating an exemplary configuration of a base station 300 according to the embodiment of the present technology.
Fig. 6 is a sequence diagram illustrating an exemplary process flow of a wireless communication system according to a first embodiment of the present technology.
Fig. 7 is a diagram illustrating exemplary transmission information transmitted from the node 100 to the base station 300 according to the embodiment of the present technology.
Fig. 8 is a diagram illustrating an exemplary relationship between encryption in the node 100 and decryption in the base station 300 according to the embodiment of the present technology.
Fig. 9 is a diagram illustrating exemplary items in a node information table 350 according to the embodiment of the present technology.
Fig. 10 is a diagram illustrating an exemplary overview of an authentication process according to the embodiment of the present technology.
Fig. 11 is a flowchart illustrating an exemplary processing procedure of the node 100 according to the embodiment of the present technology.
Fig. 12 is a flowchart illustrating an exemplary processing procedure of the mobile terminal 200 according to the embodiment of the present technology.
Fig. 13 is a flowchart illustrating an exemplary processing procedure of the base station 300 according to the embodiment of the present technology.
Fig. 14 is a diagram illustrating exemplary screen display of the mobile terminal 200 according to the embodiment of the present technology.
Fig. 15 is a sequence diagram illustrating an exemplary process flow of a wireless communication system according to a second embodiment of the present technology.
Fig. 16 is a diagram illustrating an exemplary overall configuration of a wireless communication system according to a third embodiment of the present technology.
Fig. 17 is a sequence diagram illustrating an exemplary process flow of the wireless communication system according to the third embodiment of the present technology.

### MODE FOR CARRYING OUT THE INVENTION

Hereinafter, modes for carrying out the present technology (hereinafter referred to embodiments) will be described. Descriptions will be given in the following order.
1. First Embodiment (an exemplary case where a mobile terminal registers a node and a base station authenticates the node)
2. Second Embodiment (an exemplary case where a mobile terminal registers and authenticates a node)
3. Third Embodiment (an exemplary case where a mobile terminal and a base station are integrated)

### <1. First Embodiment>

### [Configuration of Wireless Communication System]

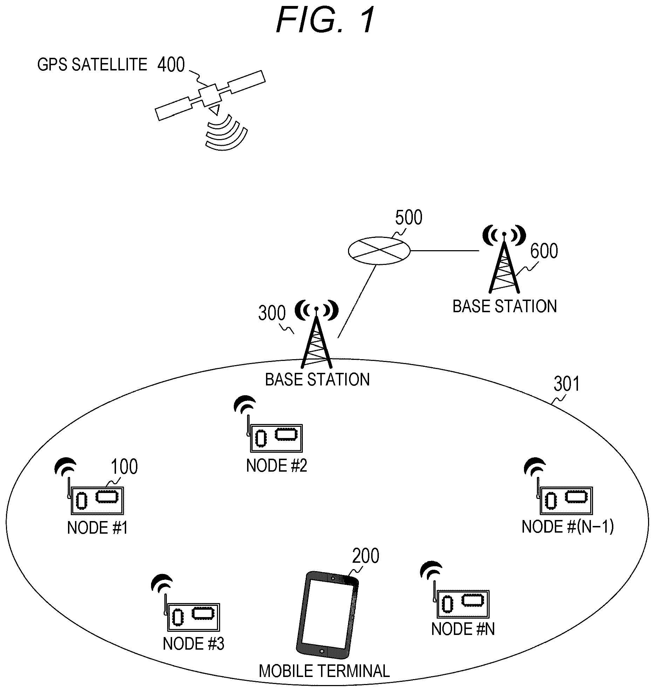

Fig. 1 is a diagram illustrating an exemplary overall configuration of a wireless communication system according to an embodiment of the present technology. The wireless communication system includes a plurality of nodes 100, a mobile terminal 200, and a base station 300. In the wireless communication system, the node 100 and the mobile terminal 200 have a function of receiving signals from a global positioning system (GPS) satellite 400 and obtaining position information. Furthermore, the base station 300 has a function of communicating with another base station 600 via a wide area network (WAN) 500, such as the Internet.

The node 100 is a wireless terminal, and a plurality of the nodes 100 can be present in a communication area 301 of the base station 300. In this example, N (N is an integer of 1 or more) nodes 100 are assumed to be present in the communication area 301. The node 100 is a terminal having LPWA and GPS communication functions. The low power, wide area (LPWA) is a wireless communication scheme that enables long-distance communication with low power consumption. While it becomes possible to drive a battery for a long period of several years or more by being premised on the LPWA, high-speed communication based on constant connection, which is performed by a mobile phone or the like, is not performed.

The node 100 encrypts the position information obtained by the GPS as will be described later, and transmits it to the base station 300. Furthermore, the node 100 can be combined with a temperature sensor, an acceleration sensor, or the like. Accordingly, the node 100 can be used for various purposes, such as the fisheries industry and farming industry.

The mobile terminal 200 is a mobile terminal (user equipment: UE) such as a mobile phone. The mobile terminal 200 includes a short-range low-power communication interface for reading public key information possessed by the node 100, a GPS receiving function for obtaining position information, and a long-term evolution (LTE) communication function for connecting to the Internet.

The base station 300 is a base station for receiving information transmitted from the node 100. The base station 300 includes a network interface for transmitting received information to the Internet or the like. The base station 600 is a mobile phone base station for communicating with another mobile terminal. The WAN 500 is the Internet or the like, and connects the base station 300 and the base station 600 in this example.

The GPS satellite 400 is a communication satellite for providing position information to the node 100 and the mobile terminal 200. There are equal to or more than 20 GPS satellites 400 above the earth. In order to accurately determine position information, information of at least three or four satellites is required.

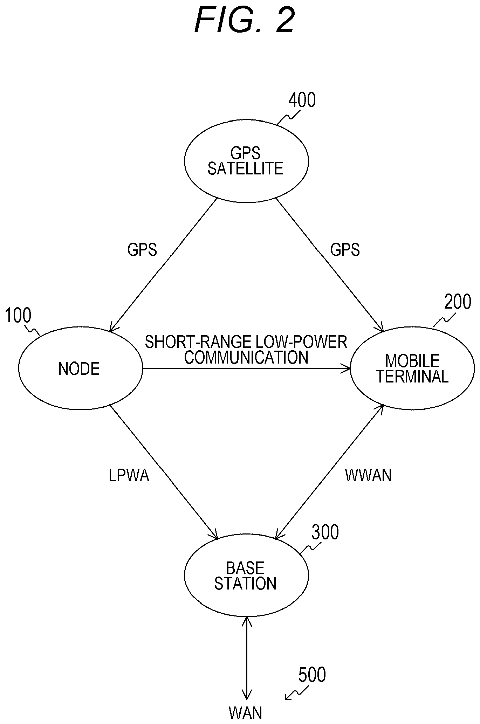

Fig. 2 is a diagram illustrating an exemplary communication mode of the wireless communication system according to the embodiment of the present technology.

GPS signals transmitted from the GPS satellite 400 is received by the node 100 and the mobile terminal 200. The node 100 and the mobile terminal 200 that have received the GPS signals obtain their own position information. Note that an A-GPS or the like may be used instead of or together with the GPS.

When information is transmitted from the node 100 to the mobile terminal 200, short-range low-power communication is used. According to the short-range low-power communication, identification information and the public key information are transmitted from the node 100 to the mobile terminal 200. As the short-range low-power communication, for example, communication based on near field communication (NFC), ZigBee, Bluetooth (registered trademark) low energy (BLE), or the like can be used. Furthermore, the mobile terminal 200 can obtain information by imaging a two-dimensional bar-code displayed on the node 100 or the like. Furthermore, as the short-range low-power communication, device provisioning protocol (DPP) bootstrap information defined by the Wi-Fi alliance may be included.

For one-way communication (uplink) in which information is transmitted from the node 100 to the base station 300, the LPWA in a 920 MHz band is used. As described above, the LPWA is a wireless communication scheme that enables long-distance communication with low power consumption. As a communication scheme having a similar function, for example, LTE machine type communication (LTE-MTC) or the like can be used. Note that a downlink communication function from the base station 300 to the node 100 is not required in the embodiment.

Two-way wireless communication is performed between the mobile terminal 200 and the base station 300 on the basis of a wireless wide area network (WWAN). The mobile terminal 200 transmits information associated with the node 100 to the base station 300 using the WWAN. Furthermore, the base station 300 transmits setup completion notification of the node 100 to the mobile terminal 200.

The base station 300 is connected to the WAN 500 to communicate with another base station 600. Since the WAN 500 requires a bandwidth, wired communication is normally used.

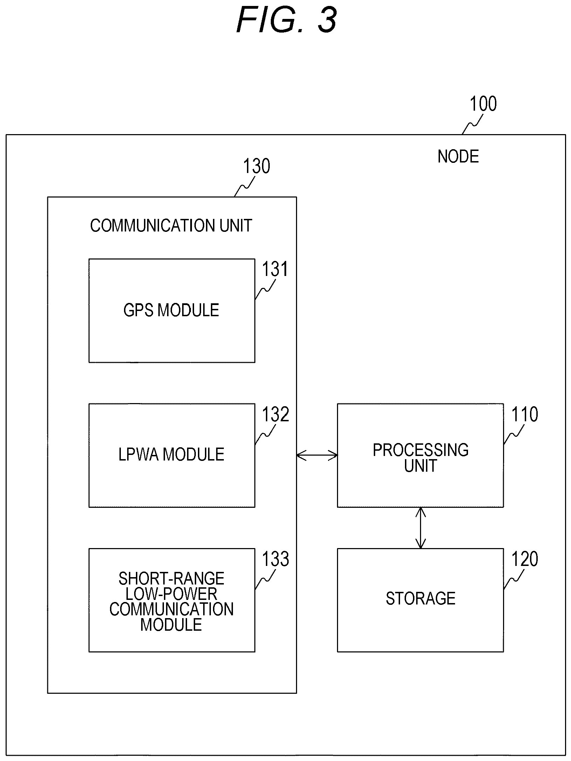

Fig. 3 is a diagram illustrating an exemplary configuration of the node 100 according to the embodiment of the present technology. The node 100 includes a processing unit 110, a storage 120, and a communication unit 130. The processing unit 110 performs necessary processing in the node 100. The storage 120 stores data and the like necessary for the node 100. The communication unit 130 includes a communication module for communicating with the outside.

The communication unit 130 includes a GPS module 131, an LPWA module 132, and a short-range low-power communication module 133. The short-range low-power communication module 133 may require a power source like an NFC reader/writer, or may not require a power source like an NFC token (radio frequency identifier (RFID) tag). Furthermore, a power source is not required in the case of a bar-code or a QR code (registered trademark).

The node 100 has a function for starting up its own power source. For example, a physical member such as a power startup button or a power source started up in conjunction with the RFID may be used. Furthermore, at this time, a reset operation may be accompanied.

It is assumed that the node 100 continues to transmit the position information obtained from the GPS signals to the base station 300 until the battery runs out after the power source is started up. For example, during a fixed period of 5 to 10 minutes after the power source is started up, the node 100 continues to transmit position information to the base station 300 at relatively short time intervals, such as 1 minute. Then, after the fixed period, it continues to transmit position information to the base station 300 at relatively long time intervals, such as 1 hour and 24 hours, to reduce power consumption.

The storage 120 includes node identification information of the node 100, its own private key for generating encrypted node identification information from the identification information, and its own public key transmitted by short-range low-power communication. Furthermore, the storage 120 stores the node position information obtained from the GPS signals, and a public key of the base station 300. A public key and a private key are paired, and information encrypted with the public key can be decrypted only with the paired private key whereas information encrypted with the private key can be decrypted only with the paired public key.

As the node identification information of the node 100, for example, a media access control (MAC) address is assumed. Furthermore, in addition to that, international mobile equipment identity (IMEI), universally unique ID (UUID), or the like may be used.

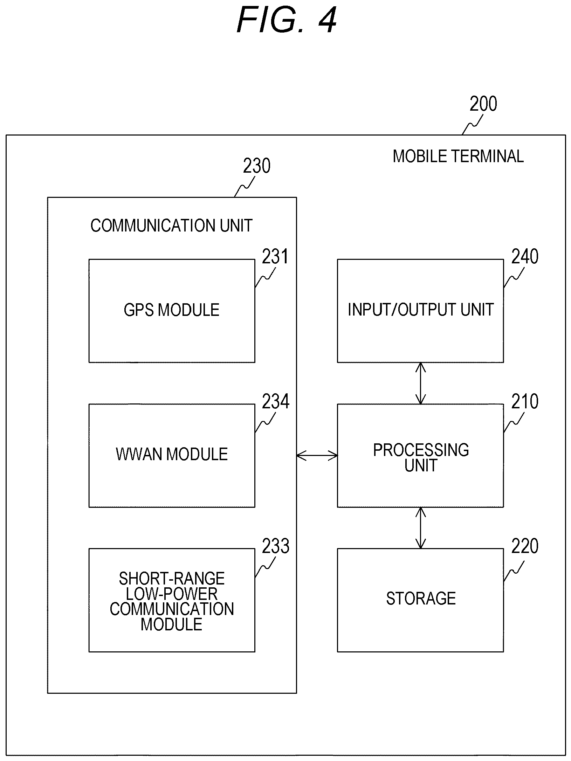

Fig. 4 is a diagram illustrating an exemplary configuration of the mobile terminal 200 according to the embodiment of the present technology. The mobile terminal 200 includes a processing unit 210, a storage 220, a communication unit 230, and an input/output unit 240. The processing unit 210 performs necessary processing in the mobile terminal 200. The storage 220 stores data and the like necessary for the mobile terminal 200. The communication unit 230 includes a communication module for communicating with the outside. The input/output unit 240 is a user interface, which is implemented by, for example, a touch panel or the like.

The communication unit 230 includes a GPS module 231, a WWAN module 234, and a short-range low-power communication module 233.

The storage 220 includes the public key information of the node 100 received by the short-range low-power communication module 233, the position information obtained on the basis of the GPS signals, and the like.

The input/output unit 240 is used to confirm intention of a user when the user obtains the public key information of the node.

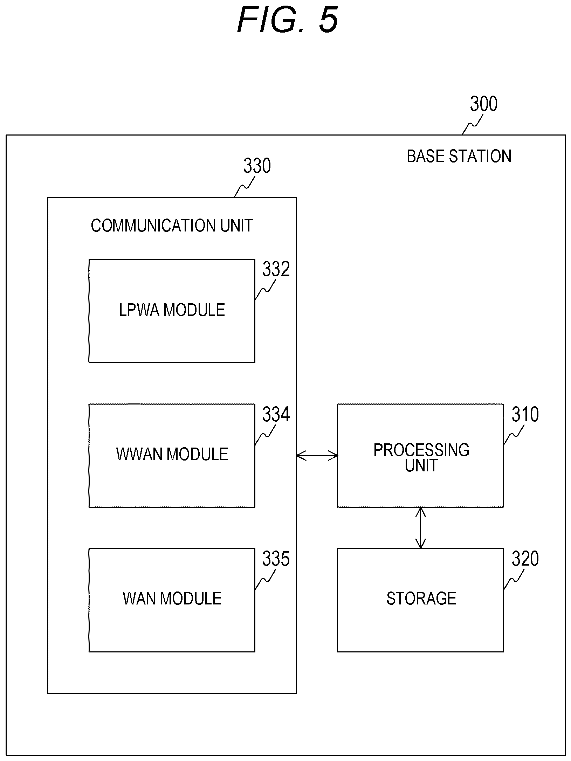

Fig. 5 is a diagram illustrating an exemplary configuration of the base station 300 according to the embodiment of the present technology. The base station 300 includes a processing unit 310, a storage 320, and a communication unit 330. The processing unit 310 performs necessary processing in the base station 300. The storage 320 stores data and the like necessary for the base station 300. The communication unit 330 includes a communication module for communicating with the outside.

The communication unit 330 includes a WAN module 335 for performing wired communication or the like, an LPWA module 332 for communicating with the node 100, and a WWAN module 334 for communicating with the mobile terminal 200.

The storage 320 stores information transmitted from the node 100, a public key of the node 100, a private key of its own, base station area information managed by itself, a node information table of the node 100, and the like.

### [Process Flow of Wireless Communication System]

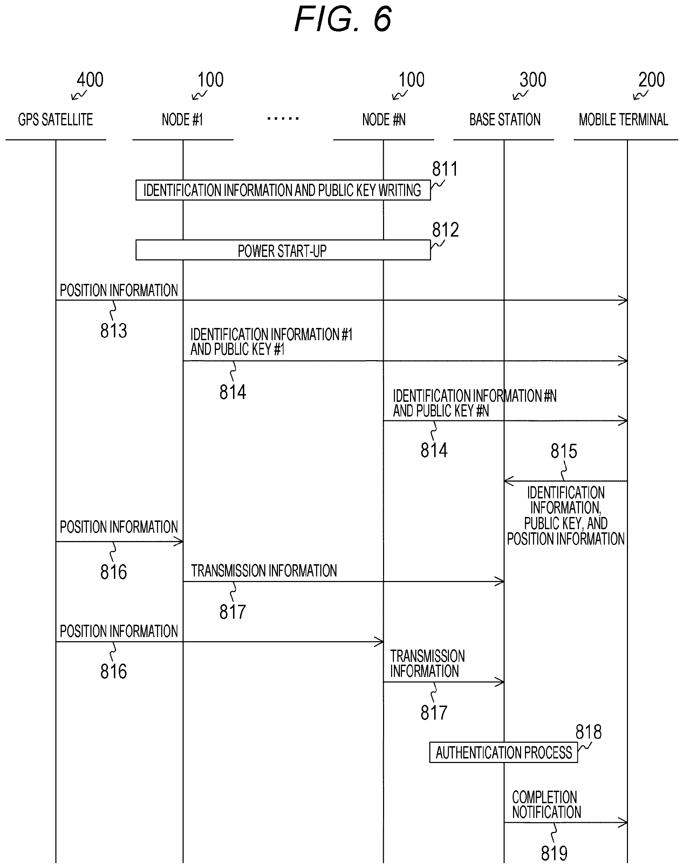

Fig. 6 is a sequence diagram illustrating an exemplary process flow of the wireless communication system according to the first embodiment of the present technology.

In the node 100, the public key of the base station 300, and the public key and the identification information of the node 100 itself are written in advance at the time of factory shipment or the like (811). Thereafter, the power source of the node 100 is started up at the time of starting registration of the node 100 (812). At this time, in a case where the power source is linked to proximity communication, the power source is started up at the time of proximity.

At the time of registration, the mobile terminal 200 receives GPS signals from the GPS satellite 400, and obtains position information of its own (813). Then, for the registration, the mobile terminal 200 obtains, using short-range low-power communication, public keys #1 to #N and identification information #1 to #N of the N nodes 100 (814). The mobile terminal 200 transmits, to the base station 300, those public keys and the identification information together with the position information at the time of registration using the WWAN (815). In a case where locations of the nodes 100 from which the public keys are obtained are different, the mobile terminal 200 obtains the position information of its own each time and transmits it to the base station 300 together with the public key and the identification information of the node 100.

With the process so far, preparation for transmitting information from the node 100 to the base station 300 is complete. That is, the storage 320 of the base station 300 stores the public key and the identification information of the node 100 and the position information at the time of registration for authenticating whether the information from the node 100 is valid.

The node 100 receives GPS signals from the GPS satellite 400, and obtains position information of its own (816). Then, encrypted node position information obtained by encrypting the position information with the public key of the base station 300 is transmitted to the base station 300 using the LPWA (817). At this time, the node 100 also transmits encrypted node identification information created by encrypting its own identification information with the private key to the base station 300 (817). The base station 300 can decrypt the encrypted node identification information using the public key of the node 100 previously obtained. Therefore, it becomes possible to play a role as a signature for identity confirmation.

The base station 300 performs the following process as an authentication process (818). First, the base station 300 decrypts the encrypted position information received from the node 100 using the private key of the base station 300 itself to obtain node position information. Then, it compares the node position information with the position information at the time of registration (815), and confirms that it is within the base station area managed by itself. Moreover, the base station 300 decrypts the encrypted identification information received from the node 100 using the public key of the node 100 to obtain node identification information. Then, the base station 300 confirms that the node identification information and management identification information managed by itself are the same. That is, if the position information indicates the inside of the area managed by the base station and the node identification information is a management target, the authentication succeeds. On the other hand, in the case of other than that, the authentication fails.

In a case where the authentication is successful, the base station 300 transmits setup completion notification to the mobile terminal 200 using the WWAN (819). The setup completion notification includes information associated with the node 100 that has succeeded or failed in the authentication.

### [Encryption and Authentication]

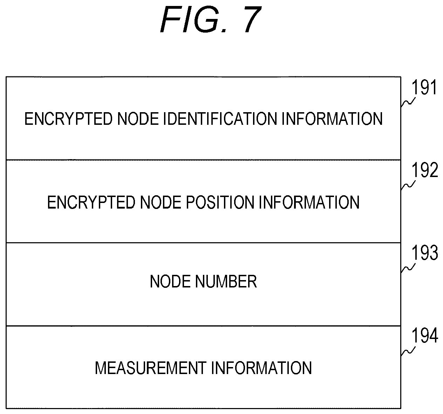

Fig. 7 is a diagram illustrating exemplary transmission information transmitted from the node 100 to the base station 300 according to the embodiment of the present technology. The transmission information (817) in the sequence diagram described above includes, for example, encrypted node identification information 191, encrypted node position information 192, a node number 193, and measurement information 194.

The encrypted node identification information 191 is obtained by encrypting the identification information of the node 100 with the private key of the node 100. The encrypted node identification information 191 is decrypted with the public key of the node 100 in the base station 300.

The encrypted node position information 192 is obtained by encrypting the position information of the node 100 with the public key of the base station 300. The encrypted node position information 192 is decrypted with the private key of the base station 300 in the base station 300.

The node number 193 is a number or the like for identifying the node 100, which is transmitted without being encrypted unlike the encrypted node identification information 191. Although the base station 300 can decrypt the encrypted node identification information 191 according to a brute-force approach using the public key of the node 100 managed by itself even without the node number 193, a process for trial is required in that case. Meanwhile, by identifying the node 100 on the basis of the node number 193 not being subject to encryption, the public key to be used can be efficiently obtained. Note that the node number 193 is exemplary second node identification information described in the claims.

The measurement information 194 is information measured by a sensor provided in the node 100. For example, at the time of managing a cow by adding the node 100 thereto, by measuring a body temperature of the cow and transmitting the body temperature as the measurement information 194 in addition to the position information, more advanced management can be performed. Note that the measurement information 194 may be encrypted with the public key of the base station 300 in a similar manner to the encrypted node position information 192. In that case, it is decrypted with the private key of the base station 300 in the base station 300.

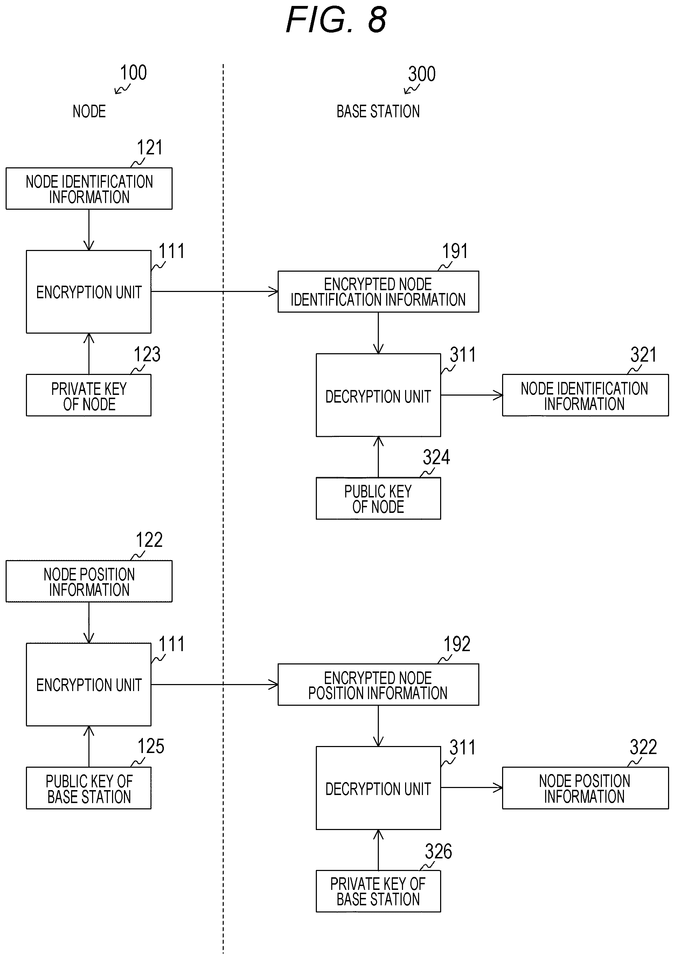

Fig. 8 is a diagram illustrating an exemplary relationship between encryption in the node 100 and decryption in the base station 300 according to the embodiment of the present technology.

Node identification information 121 stored in advance in the storage 120 of the node 100 is encrypted by an encryption unit 111 using a private key 123 stored in the storage 120 of the node 100, and is transmitted to the base station 300 as the encrypted node identification information 191 using the LPWA. Note that the encryption unit 111 is one of the functions of the processing unit 110.

The base station 300 that has received the encrypted node identification information 191 decrypts it with a decryption unit 311 using a public key 324 of the node 100, and stores obtained node identification information 321 in the storage 320. The public key 324 of the node 100 is transmitted from the mobile terminal 200 to the base station 300 using the WWAN, and is stored in the storage 320. Note that the decryption unit 311 is one of the functions of the processing unit 310.

Node position information 122 indicating the current position of the node 100 is encrypted by the encryption unit 111 using a public key 125 of the base station 300 stored in advance in the storage 120 of the node 100, and is transmitted to the base station 300 as the encrypted node position information 192 using the LPWA.

The base station 300 that has received the encrypted node position information 192 decrypts it with the decryption unit 311 using a private key 326 stored in the storage 320 of the base station 300, and stores obtained node position information 322 in the storage 320.

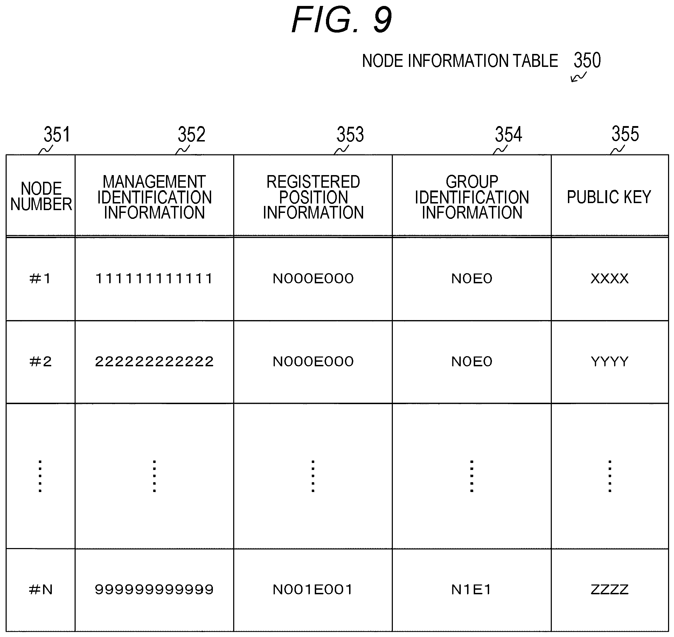

Fig. 9 is a diagram illustrating exemplary items in a node information table 350 according to the embodiment of the present technology. The node information table 350 is stored in the storage 320 of the base station 300, and retains a node number 351, management identification information 352, registered position information 353, group identification information 354, and a public key 355. Those pieces of information are obtained by the mobile terminal 200 using short-range low-power communication, and are transmitted to the base station 300 using the WWAN.

The node number 351 corresponds to the node number 193 to be transmitted from the node 100, which is a number or the like for identifying the corresponding node 100. By referring to the node information table 350 according to the node number 193 transmitted from the node 100, the corresponding item can be promptly obtained.

The management identification information 352 is information for identifying the corresponding node 100. The base station 300 compares the node identification information 321 obtained by decrypting the encrypted node identification information 191 transmitted from the node 100 with the management identification information 352, thereby performing an authentication process.

The registered position information 353 is position information at the time when the corresponding node 100 is registered by the mobile terminal 200. The base station 300 performs the authentication process with reference to the registered position information 353.

The group identification information 354 is information for identifying a group to which the node 100 belongs. The group identification information 354 is classified according to the registered position information 353. This facilitates management at the time of newly adding the node 100.

The public key 355 is a public key of the corresponding node 100. The base station 300 can decrypt the encrypted node identification information 191 using the public key 355 as the public key 324 described above.

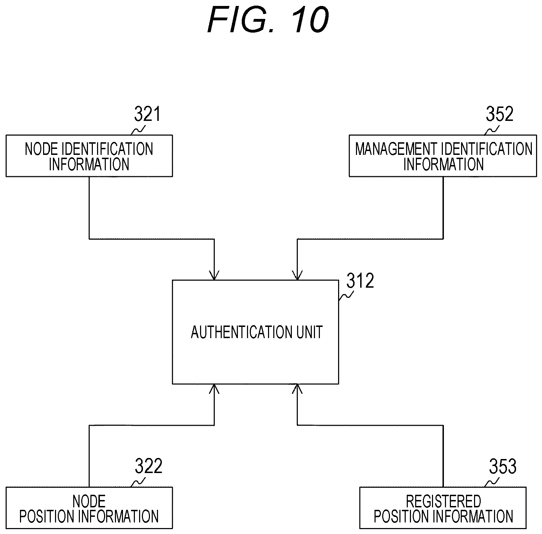

Fig. 10 is a diagram illustrating an exemplary overview of the authentication process according to the embodiment of the present technology.

In the authentication process, the authentication unit 312 of the base station 300 authenticates the node 100. At this time, one of the authentication conditions is that the node position information 322 indicates the inside of a predetermined area. Note that the authentication unit 312 is one of the functions of the processing unit 310.

Furthermore, in the embodiment, one of the conditions for authenticating the node 100 is that not only the node position information 322 but also the registered position information 353 indicate the inside of the predetermined area. The registered position information 353 is transmitted from the mobile terminal 200 as position information at the time of registration of the node 100.

The predetermined area referred to in the authentication process is an area managed by the base station 300. The predetermined area is classified and managed according to the registered position information 353. That is, the grouping of the nodes 100 as described above can be performed by the group identification information 354 being assigned to each area at the time of registration.

Furthermore, in the embodiment, one of the authentication conditions is that the node identification information 321 matches with predetermined node identification information. The predetermined node identification information is the management identification information 352 registered in the node information table 350 managed by the base station 300.

That is, the authentication succeeds in a case where the node position information 322 and the registered position information 353 indicate the inside of the area managed by the base station 300 and the node identification information 321 is registered in the node information table 350 as the management identification information 352.

### [Operation of Each Device]

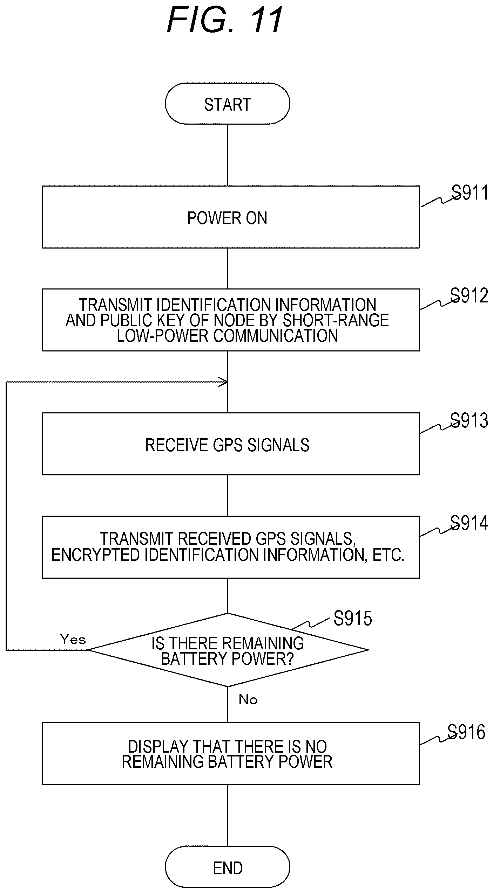

Fig. 11 is a flowchart illustrating an exemplary processing procedure of the node 100 according to the embodiment of the present technology.

First, a power button or the like is pressed, whereby the node 100 is powered on (step S911). Furthermore, in a case where the power source is linked to proximity communication, the power source is started up at the time of proximity.

The node 100 transmits the public key and the identification information of its own to the mobile terminal 200 by short-range low-power communication (step S912). As a result, information associated with the node 100 is registered in the base station 300 via the mobile terminal 200. Note that, in the case of using a passive tag, a bar-code, or a QR code, no transmission operation is required, and those pieces of information are obtained by processing performed on the side of the mobile terminal 200.

Thereafter, the node 100 receives GPS signals from the GPS satellite 400, and obtains position information of its own (step S913). Then, the node 100 transmits, to the base station 300, the encrypted node position information obtained by encrypting the position information with the public key of the base station 300 and the encrypted node identification information created by encrypting the identification information of its own with the private key using the LPWA (step S914). Those operations are repeated until the remaining battery level of the node 100 becomes less than a predetermined threshold value (Yes in step S915).

When the remaining battery level of the node 100 becomes less than the predetermined threshold value (No in step S915), the node 100 transmits, to the base station 300, signals indicating that there is no remaining battery level (step S916). Note that the remaining battery level may be transmitted together with the identification information or the like in step S914.

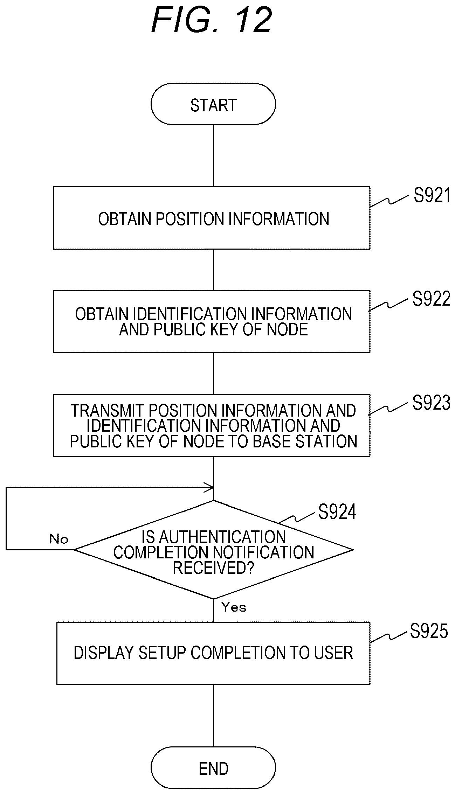

Fig. 12 is a flowchart illustrating an exemplary processing procedure of the mobile terminal 200 according to the embodiment of the present technology.

The mobile terminal 200 receives GPS signals from the GPS satellite 400, and obtains position information of its own (step S921) .

Furthermore, the mobile terminal 200 obtains the public key and the identification information of the node 100 using short-range low-power communication (step S922). At this time, the node 100 may be one, or may be plural. Note that the node 100 is powered on here in a case where the power source of the node 100 is linked to proximity communication.

Then, the mobile terminal 200 associates those position information, the public key, and the identification information with each other, and transmits them to the base station 300 using the WWAN (step S923).

Thereafter, the mobile terminal 200 waits for authentication completion notification from the base station 300 (No in step S924). When the authentication completion notification is received from the base station 300 (Yes in step S924), the mobile terminal 200 displays setup completion to the user through the input/output unit 240 (step S925).

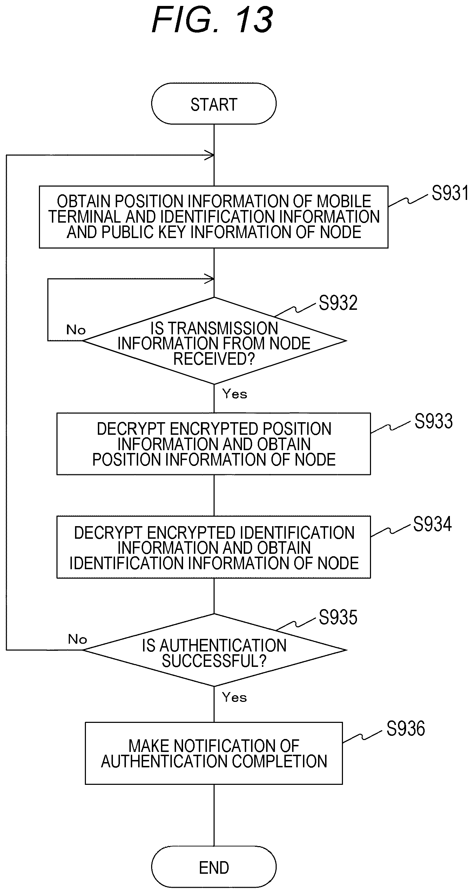

Fig. 13 is a flowchart illustrating an exemplary processing procedure of the base station 300 according to the embodiment of the present technology.

The base station 300 obtains, from the mobile terminal 200, the position information at the time of registration, and the public key and the identification information of the node 100 using the WWAN (step S931). In a case where there is a plurality of nodes 100, the position information of the mobile terminal 200, the public key, and the identification information are assumed to have one-to-one correspondence.

Thereafter, the base station 300 waits for transmission information from the node 100 (No in step S932). When the transmission information is received from the node 100 (Yes in step S932), the base station 300 decrypts the encrypted position information included in the transmission information using the private key of the base station 300 to obtain the position information (step S933). Furthermore, the base station 300 decrypts the encrypted identification information included in the transmission information using the public key of the node 100 received from the mobile terminal 200 to obtain the identification information (step S934).

Then, the base station 300 determines the authentication condition of the node 100 (step S935). That is, the authentication succeeds in a case where the node position information 322 and the registered position information 353 are within the area managed by the base station 300 and the node identification information 321 and the management identification information 352 match with each other. If the authentication fails (No in step S935), the processing of step S931 and subsequent steps are repeated.

When the authentication succeeds, the base station 300 completes the authentication procedure of the node 100, and notifies the mobile terminal 200 of the completion of the authentication (step S936).

### [User Interface]

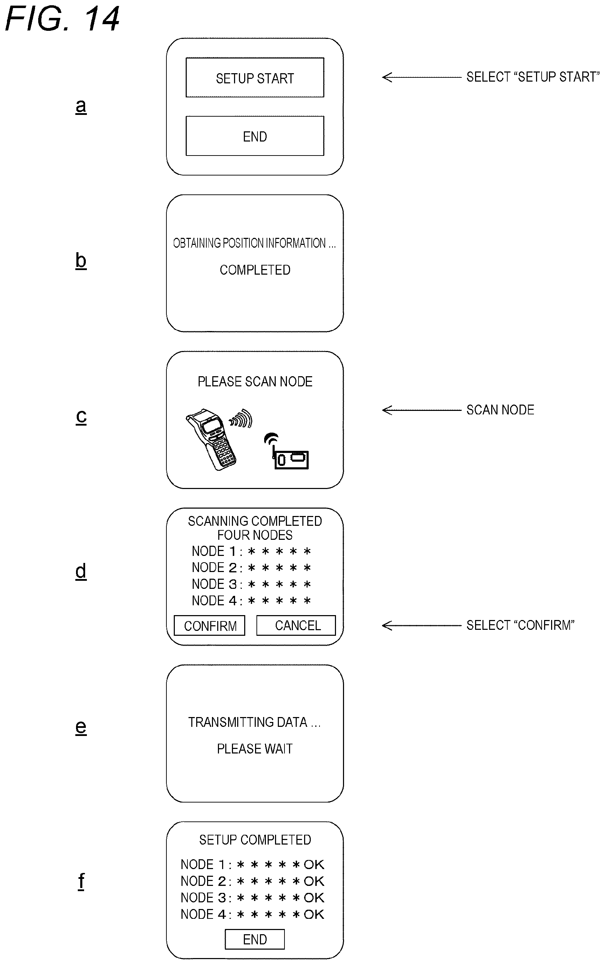

Fig. 14 is a diagram illustrating exemplary screen display of the mobile terminal 200 according to the embodiment of the present technology.

As illustrated in a in the drawing, the user selects "setup start" or "end" on the display screen of the input/output unit 240 of the mobile terminal 200. When the setup start is selected, acquisition of the position information starts and an acquisition status thereof is displayed as illustrated din b in the drawing.

When the position information is obtained, a screen prompting acquisition of the identification information and the public key information from the node 100 is displayed as illustrated in c in the drawing. In the case of RFID, the user brings the mobile terminal 200 close to the node to perform scanning. In the case of a bar-code or a QR code, the user captures an image with a camera of the mobile terminal 200 to read the label.

When the identification information and the public key information are obtained from the node 100, a list of unique information of the node is displayed as illustrated in d in the drawing. If there is no problem with the listed nodes, the user selects "confirm". In a case where there is shortage or the like, the user selects "cancel" to redo the scanning operation.

When the node list display is confirmed, the position information of the mobile terminal 200 and the identification information and the public key information of the node 100 are transmitted from the mobile terminal 200 to the base station 300 using the WWAN. Meanwhile, a transmission status thereof is displayed as illustrated in e in the drawing.

When the mobile terminal 200 receives completion notification from the base station 300, a message indicating the setup completion, information associated with the node, and the status are displayed as illustrated in f in the drawing. After confirming the display, the user selects "end" to terminate the setup.

In this manner, according to the first embodiment of the present technology, the node 100 encrypts its own position information with the public key of the base station 300 and transmits the position information to the base station 300 by one-way communication, and the base station 300 that has received the encrypted position information decrypts it with the private key of its own. Accordingly, the node 100 can be easily and safely authenticated in the base station 300. That is, according to the first embodiment, public key authentication is used, whereby the node 100 can be individually authenticated and managed.

Furthermore, according to the first embodiment, information volume of the transmission information transmitted from the node 100 can be made smaller than the public key, whereby data communication can be performed without introducing a key other than the public key. That is, it is not required to create a key for data communication, such as a block cipher key and a stream cipher key, separately from the public key in consideration of the calculation time.

Furthermore, according to the first embodiment, the node 100 is authenticated using the position information of the mobile terminal 200, whereby the authentication can be performed at a location convenient for the user. Furthermore, the nodes can be grouped by changing the setup location depending on the node 100.

Furthermore, according to the first embodiment, a passive tag, a bar-code, a QR code, or the like is used for delivery of the public key information, whereby the power consumption and manufacturing cost of the node 100 can be reduced.

Furthermore, in the first embodiment, although it is preferable to shorten a transmission interval of the position information of the node at the time of setup, the transmission interval may be increased after the setup is complete, whereby the power consumption can be reduced.

### <2. Second Embodiment>

In the first embodiment described above, an exemplary case where the mobile terminal 200 registers the node 100 and the base station 300 authenticates the node 100 has been described. Meanwhile, in a second embodiment, it is assumed that a mobile terminal 200 not only registers a node 100 but also authenticates the node 100. Note that a configuration of a wireless communication system is similar to that in the first embodiment described above, and detailed descriptions thereof will be omitted.

### [Process Flow of Wireless Communication System]

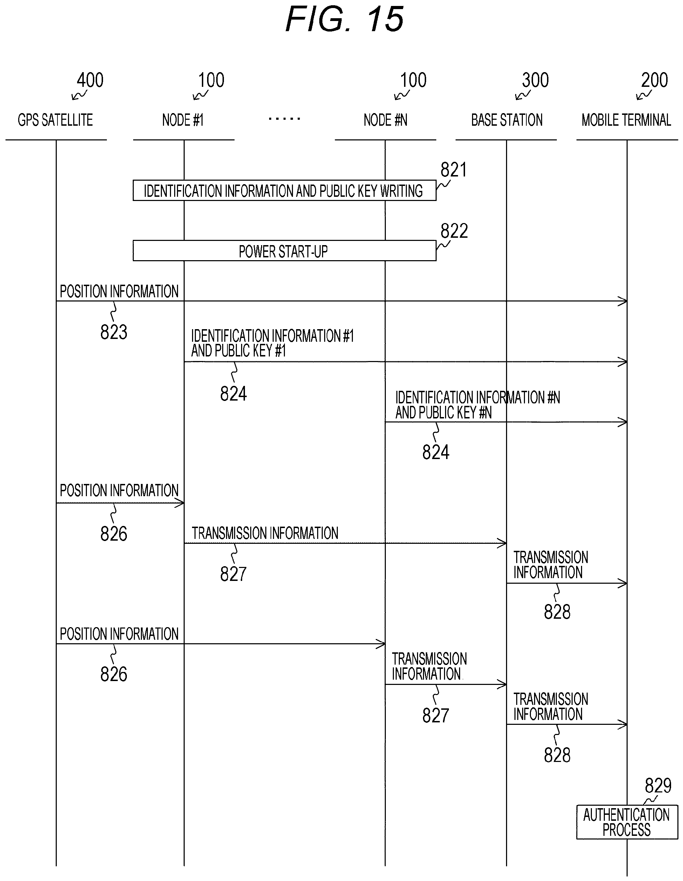

Fig. 15 is a sequence diagram illustrating an exemplary process flow of the wireless communication system according to the second embodiment of the present technology.

In a similar manner to the first embodiment described above, in the node 100, a public key of a base station 300, and a public key and identification information of the node 100 itself are written in advance at the time of factory shipment or the like (821). Thereafter, the power source of the node 100 is started up at the time of starting registration of the node 100 (822) .

At the time of registration, the mobile terminal 200 receives GPS signals from a GPS satellite 400, and obtains position information of its own (823). Then, for the registration, the mobile terminal 200 obtains, using short-range low-power communication, public keys #1 to #N and identification information #1 to #N of the N nodes 100 (824). The mobile terminal 200 stores, in a storage 220, those public keys and identification information in association with the position information at the time of registration.

With the process so far, preparation for transmitting information from the node 100 to the mobile terminal 200 is complete. That is, the storage 220 of the mobile terminal 200 stores the public key and the identification information of the node 100 and the position information at the time of registration for authenticating whether the information from the node 100 is valid. Furthermore, the storage 220 stores area information received from the base station 300 in advance.

The node 100 receives GPS signals from the GPS satellite 400, and obtains position information of its own (826). Then, encrypted node position information obtained by encrypting the position information with the public key of the base station 300 is transmitted to the base station 300 using LPWA (827). At this time, the node 100 also transmits encrypted node identification information created by encrypting its own identification information with a private key to the base station 300 (827) .

The base station 300 decrypts the encrypted position information received from the node 100 using a private key of the base station 300 of its own. The decrypted node position information and the encrypted node identification information are transmitted from the base station 300 to the mobile terminal 200 (828). The encrypted node identification information can be decrypted with the public key of the node 100 previously obtained by the mobile terminal 200. Therefore, it becomes possible to play a role as a signature for identity confirmation.

The mobile terminal 200 performs the following process as an authentication process (829). First, it compares the node position information decrypted by the base station 300 with the position information at the time of registration (823), and confirms that it is within the base station area managed by itself. Moreover, the mobile terminal 200 decrypts the encrypted identification information received from the node 100 using the public key of the node 100 to obtain node identification information. Then, the mobile terminal 200 confirms that the node identification information and management identification information managed by itself are the same. That is, if the position information indicates the inside of the area managed by the base station and the node identification information is a management target, the authentication succeeds. On the other hand, in the case of other than that, the authentication fails.

In this manner, according to the second embodiment of the present technology, the mobile terminal 200 not only registers the node 100 but also authenticates the node 100. Accordingly, an authentication result can be displayed on an input/output unit 240 of the mobile terminal 200 as it is.

### <3. Third Embodiment>

In the first embodiment described above, an exemplary case where the mobile terminal 200 registers the node 100 and the base station 300 authenticates the node 100 has been described. Meanwhile, in a third embodiment, a portable base station in which both are integrated is assumed.

### [Configuration of Wireless Communication System]

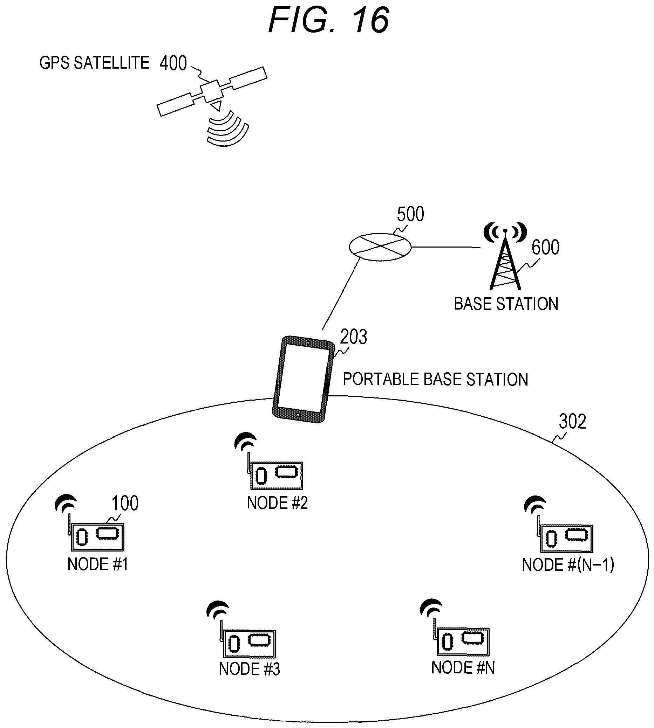

Fig. 16 is a diagram illustrating an exemplary overall configuration of a wireless communication system according to the third embodiment of the present technology. The wireless communication system according to the third embodiment includes a portable base station 203 in which a base station and a mobile terminal are integrated. The portable base station 203 functions as the mobile terminal 200 according to the first embodiment described above, and also functions as the base station 300 according to the first embodiment described above.

The portable base station 203 has a function of receiving signals from a GPS satellite 400 and obtaining position information. Furthermore, the portable base station 203 includes a short-range low-power communication interface for reading public key information owned by the node 100. Furthermore, the portable base station 203 has a function of communicating with another base station 600 via a WAN 500 such as the Internet. Furthermore, the portable base station 203 has a function of receiving transmission information transmitted from the node 100 in a communication area 302 by LPWA one-way communication.

Functions of the GPS satellite 400 and the node 100 are similar to those in the first embodiment described above, and detailed descriptions thereof will be omitted. Furthermore, a configuration of each of them is also similar to that in the first embodiment described above, and detailed descriptions thereof will be omitted.

### [Process Flow of Wireless Communication System]

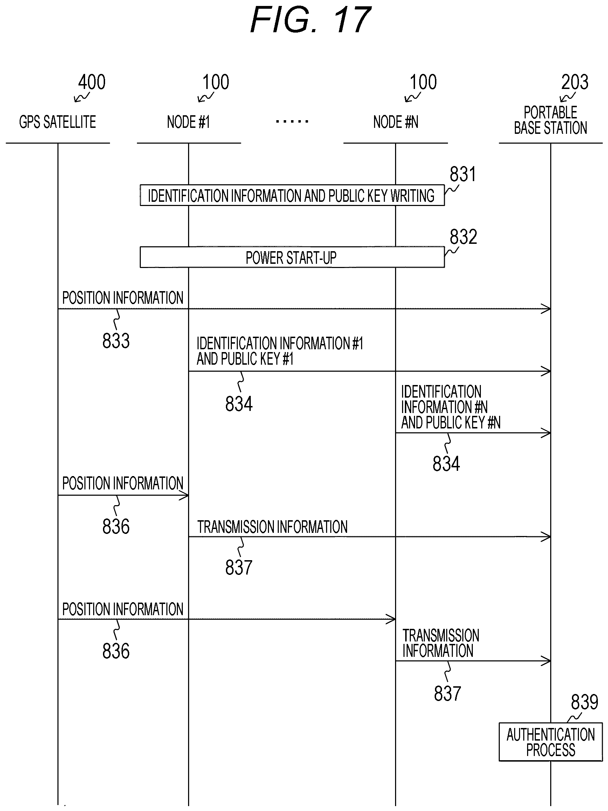

Fig. 17 is a sequence diagram illustrating an exemplary process flow of the wireless communication system according to the third embodiment of the present technology.

In the node 100, a public key of the portable base station 203, and a public key and identification information of the node 100 itself are written in advance at the time of factory shipment or the like (831). Thereafter, the power source of the node 100 is started up at the time of starting registration of the node 100 (832). At this time, in a case where the power source is linked to proximity communication, the power source is started up at the time of proximity.

At the time of registration, the portable base station 203 receives GPS signals from the GPS satellite 400, and obtains position information of its own (833). Then, for the registration, the portable base station 203 obtains, using short-range low-power communication, public keys #1 to #N and identification information #1 to #N of the N nodes 100 (834). The portable base station 203 stores those public keys and identification information in association with the position information at the time of registration. In a case where locations of the nodes 100 from which the public keys are obtained are different, the portable base station 203 obtains the position information of its own each time and stores it together with the public key and the identification information of the node 100.

With the process so far, preparation for transmitting information from the node 100 to the portable base station 203 is complete. That is, the portable base station 203 stores the public key and the identification information of the node 100 and the position information at the time of registration for authenticating whether the information from the node 100 is valid.

The node 100 receives GPS signals from the GPS satellite 400, and obtains position information of its own (836). Then, encrypted node position information obtained by encrypting the position information with the public key of the portable base station 203 is transmitted to the portable base station 203 using LPWA (837). At this time, the node 100 also transmits encrypted node identification information created by encrypting its own identification information with a private key to the portable base station 203 (837). The portable base station 203 can decrypt the encrypted node identification information using the public key of the node 100 previously obtained. Therefore, it becomes possible to play a role as a signature for identity confirmation.

The portable base station 203 performs the following process as an authentication process (839). First, the portable base station 203 decrypts the encrypted position information received from the node 100 using the private key of the portable base station 203 itself to obtain node position information. Then, it compares the node position information with the position information at the time of registration (833), and confirms that it is within the base station area managed by itself. Moreover, the portable base station 203 decrypts the encrypted identification information received from the node 100 using the public key of the node 100 to obtain node identification information. Then, the portable base station 203 confirms that the node identification information and management identification information managed by itself are the same. That is, if the position information indicates the inside of the area managed by the base station and the node identification information is a management target, the authentication succeeds. On the other hand, in the case of other than that, the authentication fails.

In this manner, according to the third embodiment of the present technology, the node 100 can be registered and authenticated in the portable base station 203 in which the base station and the mobile terminal are integrated.

Note that the embodiments described above are examples for embodying the present technology, and the matters in the embodiments and the matters used to specify the invention in the claims have a correspondence relationship. Similarly, the matters used to specify the invention in the claims and the matters in the embodiments of the present technology with names same as those have a correspondence relationship. However, the present technology is not limited to the embodiments, and can be embodied by the embodiments being subject to various modifications without departing from the gist thereof.

Furthermore, the processing procedures described in the embodiments above may be regarded as a method having a series of those procedures, or may be regarded as a program for causing a computer to execute the series of those procedures or a recording medium storing the program. As the recording medium, for example, a compact disc (CD), a mini disc (MD), a digital versatile disc (DVD), a memory card, a Blu-ray (registered trademark) disc, or the like can be used.

Note that the effects described herein are merely examples and not limited, and additional effects may be included.

Note that the present technology can also employ the following configurations.
(1) A wireless communication device including:
   a decryption unit that decrypts, with its own private key, encrypted node position information included in transmission information transmitted by one-way communication from a node; and
   an authentication unit that authenticates the node with an authentication condition that the decrypted node position information indicates inside of a predetermined area.
(2) The wireless communication device according to (1) described above, in which the predetermined area is an area managed by the wireless communication device.
(3) The wireless communication device according to (1) or (2) described above, in which
   the authentication unit authenticates the node with an authentication condition that both of the decrypted node position information and registered position information transmitted from another wireless communication device indicate the inside of the predetermined area.
(4) The wireless communication device according to claim (3) described above, in which the predetermined area is an area managed by the wireless communication device, and is classified according to the registered position information.
(5) The wireless communication device according to any one of (1) to (4) described above, in which the decryption unit decrypts encrypted node identification information included in the transmission information with a public key of the node, and
   the authentication unit authenticates the node with an authentication condition that the decrypted node position information indicates the inside of the predetermined area and the decrypted node identification information matches with predetermined node identification information.
(6) The wireless communication device according to (5) described above, in which the public key of the node is received from another wireless communication device.
(7) The wireless communication device according to (5) described above, in which the public key of the node is obtained from the node in advance.
(8) The wireless communication device according to (5) described above, in which the transmission information further includes unencrypted second node identification information for identifying the node.
(9) The wireless communication device according to any one of (1) to (8) described above, in which the transmission information further includes measurement information measured by the node.
(10) The wireless communication device according to (9) described above, in which
   the measurement information is encrypted measurement information encrypted with its own public key, and
   the decryption unit decrypts the encrypted measurement information with its own private key.
(11) The wireless communication device according to any one of (1) to (10) described above, in which the one-way communication is wireless communication based on a low power, wide area (LPWA) scheme.
(12) A wireless communication method including:
   a decryption procedure of decrypting, with its own private key, encrypted node position information included in transmission information transmitted by one-way communication from a node; and
   an authentication procedure of authenticating the node with an authentication condition that the decrypted node position information indicates inside of a predetermined area.
(13) A wireless communication system including:
   a node that transmits transmission information by one-way communication; and
   a wireless communication device that includes a decryption unit that decrypts, with its own private key, encrypted node position information included in the transmission information, and an authentication unit that authenticates the node with an authentication condition that the decrypted node position information indicates inside of a predetermined area.

### REFERENCE SIGNS LIST

- 100: Node
- 110: Processing unit
- 120: Storage
- 130: Communication unit
- 131: GPS module
- 132: LPWA module
- 133: Short-range low-power communication module
- 200: Mobile terminal
- 203: Portable base station
- 210: Processing unit
- 220: Storage
- 230: Communication unit
- 231: GPS module
- 233: Short-range low-power communication module
- 234: WWAN module
- 240: Input/output unit
- 300: Base station
- 310: Processing unit
- 320: Storage
- 332: LPWA module
- 334: WWAN module
- 335: WAN module
- 350: Node information table
- 400: GPS satellite
- 600: Base station

## Claims

1. A wireless communication device comprising:
a decryption unit that decrypts, with a private key of the wireless communication device, encrypted node position information included in transmission information transmitted by one-way communication from a node; and
an authentication unit that authenticates the node with an authentication condition that the decrypted node position information indicates inside of a predetermined area.

2. The wireless communication device according to claim 1, wherein the predetermined area is an area managed by the wireless communication device.

3. The wireless communication device according to claim 1, wherein
the authentication unit authenticates the node with an authentication condition that both of the decrypted node position information and registered position information transmitted from another wireless communication device indicate the inside of the predetermined area.

4. The wireless communication device according to claim 3, wherein the predetermined area is an area managed by the wireless communication device, and is classified according to the registered position information.

5. The wireless communication device according to claim 1, wherein
the decryption unit decrypts encrypted node identification information included in the transmission information with a public key of the node, and
the authentication unit authenticates the node with an authentication condition that the decrypted node position information indicates the inside of the predetermined area and the decrypted node identification information matches with predetermined node identification information.

6. The wireless communication device according to claim 5, wherein the public key of the node is received from another wireless communication device.

7. The wireless communication device according to claim 5, wherein the public key of the node is obtained from the node in advance.

8. The wireless communication device according to claim 5, wherein the transmission information further includes unencrypted second node identification information for identifying the node.

9. The wireless communication device according to claim 1, wherein the transmission information further includes measurement information measured by the node.

10. The wireless communication device according to claim 9, wherein
the measurement information is encrypted measurement information encrypted with a public key of the wireless communication device, and
the decryption unit decrypts the encrypted measurement information with the private key of the wireless communication device.

11. The wireless communication device according to claim 1, wherein the one-way communication is wireless communication based on a low power, wide area (LPWA) scheme.

12. A wireless communication method comprising:
a decryption procedure of decrypting, with its own private key, encrypted node position information included in transmission information transmitted by one-way communication from a node; and
an authentication procedure of authenticating the node with an authentication condition that the decrypted node position information indicates inside of a predetermined area.

13. A wireless communication system comprising:
a node that transmits transmission information by one-way communication; and
a wireless communication device that includes a decryption unit that decrypts, with a private key of the wireless communication device, encrypted node position information included in the transmission information, and an authentication unit that authenticates the node with an authentication condition that the decrypted node position information indicates inside of a predetermined area.
